# EUROPÄISCHE PATENTANMELDUNG

(11) **EP 4 488 741 A1**
(43) Veröffentlichungstag der Anmeldung: **08.01.2025**
(21) Anmeldenummer: 24186333.1
(22) Anmeldetag: 03.07.2024
(51) Int. Cl.: G02B 25/00, G02B 7/00, G02B 21/22

(54) **OKULARVORRICHTUNG UND PRÜFVORRICHTUNG MIT EINER OKULARVORRICHTUNG**

(30) Priorität: 06.07.2023 DE 102023118028
(71) Anmelder: Karl Storz SE & Co. KG, 78532 Tuttlingen (DE)
(72) Erfinder: MÜLLER, Tim, 78604 Rietheim-Weilheim (DE); RIEBLE, Juliane, 78532 Tuttlingen (DE); RIEPLE, Alicia, 78532 Tuttlingen (DE)

(57) **Zusammenfassung**

Die Erfindung betrifft eine Okularvorrichtung (10), insbesondere für eine Prüfvorrichtung (100), umfassend eine Fassung (20), eine Strichplatte (30), eine Strichplattenfassung (40), in welche die Strichplatte (30) eingefasst ist, wobei die Strichplattenfassung (40) in der Fassung um eine Drehachse (50) rotierbar gelagert ist, und wobei ein gemeinsamer Schwerpunkt (55) der Strichplattenfassung (40) und der Strichplatte (30) außerhalb der Drehachse (50) liegt.

## Beschreibung

Die Erfindung eine Okularvorrichtung, die für den Einsatz in einem optischen System, insbesondere einer Prüfvorrichtung, geeignet ist. Ferner betrifft die Erfindung eine Prüfvorrichtung mit einer Okularvorrichtung. Beispielsweise wird die Prüfvorrichtung zur Kontrolle von Bildgebungsvorrichtungen wie Exoskopen oder Videomikroskopen, insbesondere für eine medizinische Anwendung.

Insbesondere überprüft der Benutzer mittels der Prüfvorrichtungen einen optischen Zoomablauf und/oder eine Bildaufrichtung der Bildgebungsvorrichtung.

Die Überprüfung des optischen Zoomablaufs erfolgt insbesondere, indem ein Benutzer mit der Prüfvorrichtung überprüft, ob ein Mittelpunkt eines Blickfelds der Bildgebungsvorrichtung sich bei einer Veränderung des Zooms verschiebt. Zur Überprüfung der Bildaufrichtung wird die horizontale Ausbreitung der Bilder der Bildgebungsvorrichtung im Bezug zu einer Waagrechten durch einen Benutzer visuell überprüft.

Zur visuellen Überprüfung werden Okulare mit Strichplatte als augenseitig optisch wirksamer Teil von Prüfvorrichtungen eingesetzt, mittels derer der Benutzer den Mittelpunkt des Blickfelds der Bildgebungsvorrichtung oder die horizontale Ausbreitung der Bilder der Bildgebungsvorrichtung im Bezug zu einer Waagrechten mit Linien auf einer Grundplatte abgleichen.

Vor jedem Prüfvorgang muss das Okular individuell and die Kopfhaltung und/oder, sofern die Prüfvorrichtung zwei Okulare aufweist, mittels Schwenkbewegungen an den Augenabstand des Benutzers angepasst werden, damit der 3D-Effekt der Bildgebungsvorrichtung für das menschliche Auge durch einen falschen Abstand der Okulare nicht verloren geht.

In bekannten Okularen verändert sich durch die Anpassung des Okulars oder der Okulare an den Benutzer auch gleichzeitig die Orientierung der Strichplatte des Okulars oder der Okulare, wodurch der visuelle Abgleich durch den Benutzer zu einer fehlerhaften Prüfung führen würde. Durch die Änderung der Orientierung der Strichplatte des Okulars oder der Okulare kann es weiter der Fall sein, dass die Ausrichtungen der Strichplatten der Okulare in Prüfvorrichtungen mit zwei Okularen nicht mehr übereinstimmen und somit der Benutzer nicht übereinstimmende Referenzlinien der Strichplatte wahrnimmt.

Um mit einem Prüfvorgang beginnen zu können, muss daher der Benutzer in bekannten Okularen die Orientierung bzw. die Reorientierung der Strichplatte des Okulars oder der Strichplatten der Okulare zeitaufwendig manuell einstellen.

Ausgehend von dem Stand der Technik liegt der Erfindung die Aufgabe zugrunde, eine einfache Handhabbarkeit einer Okularvorrichtung zu erzielen.

Die Aufgabe wird erfindungsgemäß gelöst durch Okularvorrichtungen für ein optisches System, insbesondere für eine Prüfvorrichtung, wie sie hierin beschrieben und in den Ansprüchen definiert sind.

Die vorliegende Erfindung sieht vor, eine Okularvorrichtung für ein optisches System, insbesondere für eine Prüfvorrichtung, bereitzustellen. Die Okularvorrichtung umfasst eine Fassung, eine Strichplatte und eine Strichplattenfassung, in welche die Strichplatte eingefasst ist. Die Strichplattenfassung ist in der Fassung um eine Drehachse rotierbar gelagert. Zudem liegt ein gemeinsamer Schwerpunkt der Strichplattenfassung und der Strichplatte außerhalb der Drehachse.

Durch die erfindungsgemäßen Merkmale kann eine einfache Handhabbarkeit einer Okularvorrichtung erzielt werden. Im Speziellen kann die Strichplatte der Okularvorrichtung vereinfacht, insbesondere ohne Zutun des Benutzers, ausgerichtet werden. Insbesondere vereinfachen die erfindungsgemäßen Merkmale die Ausrichtung einer Okularvorrichtung in einem optischen System.

Vorzugsweise kann das optische System eine Prüfvorrichtung umfassen, insbesondere eine Prüfvorrichtung für eine Bildgebungsvorrichtung wie beispielsweise ein Exoskop und/oder ein Videomikroskop. Das optische System kann jedoch auch ein Endoskop, ein Fernglas, ein Fernrohr, ein Teleskop oder ein Lichtmikroskop sein.

Die Okularvorrichtung kann ein Okular umfassen und/oder an einem Okular des optischen Systems angebracht und/oder anbringbar sein. Die Okularvorrichtung kann zumindest im Wesentlichen in Form eines Zylinders ausgestaltet sein.

Ein Okular ist insbesondere der augenseitig optisch wirksame Teil eines optischen Systems. Ein Okular kann aus einer einzelnen Linse oder aus einem Linsensystem bestehen, um ein Zwischenbild einer optischen Abbildung für das menschliche Auge eines Benutzers virtuell abzubilden.

Die Fassung der Okularvorrichtung kann insbesondere in eine Aufnahme des optischen Systems eingebracht sein. Die Aufnahme des optischen Systems weist beispielsweise die Form eines Tubus auf. Insbesondere ist die Fassung der Okularvorrichtung in eine Aufnahme einer Prüfvorrichtung eingebracht. Die Fassung kann in Form eines Zylinders ausgebildet sein. Weiter kann die Fassung rotationsymmetrisch ausgebildet sein. Die Fassung weist beispielsweise eine axiale Richtung und eine radiale Richtung auf.

Die Strichplatte dient insbesondere dazu dem Benutzer eine optische Orientierung zu bieten. Die Strichplatte ist insbesondere an einer Seite des Okulars angebracht, die dem Auge zugewandt ist. Weiter kann die Strichplatte direkt vor der einzelnen Linse oder dem Linsensystem des Okulars angebracht sein. Insbesondere befindet sich die Strichplatte im inneren Brennpunkt des Okulars, wodurch die Strichplatte dem Auge des Benutzers scharf erscheinen kann.

Die Strichplatte kann eine Glasplatte, insbesondere eine Opalglasplatte sein, die wenigstens eine Referenzlinie aufweist. Die wenigstens ein Referenzlinie kann auf die Glasplatte aufgebracht und/oder in die Glasplatte eingebracht sein. Weiter kann die Strichplatte wenige Referenzlinien oder sogar ein ganzes Fadennetz aufweisen, das aus Referenzlinien gebildet ist. Vorzugsweise können die Referenzlinien der Strichplatte als Fadenkreuz ausgebildet sein und/oder ein Fadenkreuz bilden.

Die wenigstens eine Referenzlinie kann zur Schätzung oder Messung kleiner Winkel verwendet werden. Insbesondere markiert die wenigstens eine Referenzlinie den Horizont des optischen Systems. Hierdurch kann die Strichplatte zur Schätzung und/oder Messung kleiner Winkel eingesetzt werden.

Insbesondere beim Einsatz der Okularvorrichtung in der Prüfvorrichtung für eine Bildgebungsvorrichtung kann durch einen visuellen Abgleich der Referenzlinien mit Linien auf einer Bodenplatte der Prüfvorrichtung bestimmt werden, ob die Bildgebungsvorrichtung fehlerhaft ist und/oder eine geeignete optische Kalibration und/oder Justage aufweist. Beispielsweise im Fall von Exoskopen oder Videomikroskopen, die zur 3D-Bilderfassung eingerichtet sein, kann hierdurch eine fehlerhafte Überlagerung von Monobildern verhindert werden, die für den Benutzer zu einer irritierenden und/oder nicht korrekt interpretierbaren 3D-Wahrnehmung führen könnte.

Die Strichplattenfassung dient insbesondere zur Aufnahme der Strichplatte. Die Strichplattenfassung kann den Umfang der Strichplatte vollumfänglich umfassen, d.h. die Strichplatte kann in der radialen Richtung die Strichplattenfassung begrenzen. In axialer Richtung ist die Strichplatte beispielsweise von der Strichplattenfassung weitestgehend nicht bedeckt. Die Strichplattenfassung ist insbesondere aus einem Stahl ausgebildet.

Die Strichplattenfassung und die Strichplatte können insbesondere stoffschlüssig miteinander verbunden sein, um eine sichere und feste Verbindung zwischen der Strichplatte und der Strichplattenfassung auszubilden.

Um eine langlebige stoffschlüssige Verbindung, insbesondere durch Kleben, zu realisieren, kann die Strichplattenfassung aus Stahl und die Strichplatte aus Opalglas ausgebildet sein.

Die Drehachse kann entlang der axialen Richtung der Strichplattenfassung ausgebildet sein und definiert insbesondere diejenige Achse, um die sich die Strichplattenfassung und die Strichplatte in der Fassung drehen kann bzw. diejenige Achse, um die die Strichplattenfassung ggf. durch weitere Elemente rotierbar gelagert ist.

Dadurch, dass der gemeinsame Schwerpunkt der Strichplattenfassung und der Strichplatte außerhalb der Drehachse liegt, kann sich die Strichplattenfassung und die Strichplatte bei unterschiedlichsten Ausrichtungen bzw. Orientierungen der Okularvorrichtung zumindest weitestgehend gleichbleibend ausrichten. Insbesondere, wenn für jedes Auge des Benutzers jeweils eine Okularvorrichtung verwendet wird, kann dadurch erreicht werden, dass die Referenzlinien der Strichplatten der beiden Okularvorrichtungen sich parallel zueinander und/oder miteinander fluchtend ausrichten.

Damit die Strichplattenfassung sich leichtgängig in der Fassung drehen kann und damit die Drehachse der Strichplattenfassung in der Fassung definiert ist, kann die Okularvorrichtung insbesondere ein Drehlager umfassen. Um das Drehlager wartungsarm mit einer langen Laufzeit zu gestalten, kann das Drehlager ein Gleitlager sein. Weiter ist es auch möglich, Kugellager als Drehlager einzusetzen, um das Drehlager besonders leichtgängig zu gestalten.

Um die Reibung zwischen der Strichplattenfassung und der Fassung zu reduzieren, kann das Drehlager einen Gleitring umfassen. Dies ist insbesondere der Fall, wenn das Drehlager ein Gleitlager ist. Der Gleitring kann vorzugsweise die Strichplattenfassung einfassen bzw. der Gleitring kann die Strichplattenfassung in der radialen Richtung des Gleitrings umgeben. Der Gleitring kann insbesondere mit der Strichplattenfassung mitdrehen. Der Gleitring kann aber auch in die Fassung eingebracht sein und relativ zur Fassung ortsfest sein.

Weiter kann der Gleitring insbesondere einen selbstschmierenden Werkstoff umfassen und/oder aus einem selbstschmierenden Werkstoff gebildet sein. Der selbstschmierende Werkstoff kann Teflon und/oder ein Kunststoff, insbesondere ein schwarzer Werkstoff/Kunststoff und/oder schwarzes Teflon, sein. Durch den selbstschmierenden Werkstoff kann die Reibung zwischen dem Gleitring und der Fassung und/oder die Reibung zwischen dem Gleitring und der Strichplattenfassung reduziert werden. Die Verwendung eines schwarzen Werkstoffs kann störende Lichtstreuung und/oder das Vorhandensein für den Benutzer irritierender Komponenten im Blickfeld vermeiden.

Um den Gleitring in der Strichplattenfassung sicher zu befestigen und damit die Lebensdauer der Okularvorrichtung zu erhöhen, kann die Strichplattenfassung in dem Gleitring formschlüssig aufgenommen sein. Beispielsweise kann die Strichplattenfassung eine Vertiefung in axialer Richtung umfassen, in die der Gleitring eingelegt oder eingepasst wird.

Weiter kann die Strichplattenfassung zusätzlich zur formschlüssigen Verbindung oder ohne eine zusätzliche formschlüssige Verbindung durch eine stoffschlüssige Verbindung in den Gleitring aufgenommen sein. Dadurch kann der Gleitring noch sicherer mit der Strichplattenfassung verbunden werden, um die Lebensdauer der Okularvorrichtung noch weiter zu erhöhen.

Die Strichplattenfassung kann insbesondere nicht rotationssymmetrisch bzw. rotationsasymmetrisch ausgestaltet sein. Dadurch kann der gemeinsame Schwerpunkt der Strichplattenfassung und der Strichplatte aus der Drehachse der Strichplattenfassung herausgeschoben werden. Dadurch kann erreicht werden, dass sich die Strichplatte durch die Schwerkraft automatisch ausrichtet.

Um den gemeinsamen Schwerpunkt der Strichplattenfassung und der Strichplatte aus der Drehachse der Strichplattenfassung herauszuschieben, kann die Strichplattenfassung insbesondere einen radial verbreiterten Abschnitt aufweisen. Der radial verbreiterte Abschnitt kann beispielsweise durch zwei unterschiedlich große Außendurchmesser der Strichplattenfassung realisiert sein. Insbesondere kann die Strichplatte Markierungen aufweisen, anhand derer die Strichplattenfassung an einem Übergang zwischen den zwei unterschiedlich großen Außendurchmessern der Strichplatte ausgerichtet ist, um die Montage der Strichplatte in der Strichplattenfassung vereinfachen zu können.

Die Strichplatte kann insbesondere rotationssymmetrisch ausgestaltetet sein, um kostengünstige Strichplatten einsetzen zu können und damit die Kosten für Okularvorrichtung zu reduzieren. Insbesondere können als Strichplatte Standardbauteile eingesetzt sein.

Um die nicht rotationsymmetrische Form der Strichplattenfassung auszugleichen und um die Strichplattenfassung sicher formschlüssig mit dem Gleitring zu verbinden, kann der Gleitring eine radiale Ausnehmung aufweisen, in welcher der radial verbreiterte Abschnitt der Strichplattenfassung aufgenommen ist.

Um den gemeinsamen Schwerpunkt der Strichplattenfassung und der Strichplatte aus der Drehachse der Strichplatte herauszuschieben, ist es alternativ oder zusätzlich möglich, dass die Strichplatte nicht rotationsymmetrisch ausgestaltet ist. In einigen Fällen kann dabei die Strichplattenfassung rotationssymmetrisch ausgestaltet sein. Dadurch kann ein Gleitring mit einer einfachen Geometrie verwendet werden. Ferner kann es hierdurch möglich sein, dass der Gleitring ortsfest mit der Fassung verbunden ist.

Weiter kann die Strichplattenfassung eine inhomogene Dichte aufweisen. Dadurch kann die Strichplattenfassung und/oder die Strichplatte rotationsymmetrisch ausgestalten sein und dennoch kann der gemeinsame Schwerpunkt der Strichplattenfassung und der Strichplatte aus der Drehachse der Strichplattenfassung herausgeschoben werden. Beispielsweise kann dadurch auf den Einsatz eines Gleitrings für die Strichplattenfassung verzichtet werden, und/oder es ist möglich, dass der Gleitring ortsfest mit der Fassung verbunden ist.

Weiter kann die Strichplattenfassung spiegelsymmetrisch ausgestaltet sein. Dadurch kann die Strichplatte leichter bezüglich der Strichplattenfassung ausgerichtet werden.

Die Strichplatte kann insbesondere einen Horizont definieren, der senkrecht zu einer radialen Linie orientiert ist, die sich von einem Mittelpunkt der Strichplattenfassung durch den gemeinsamen Schwerpunkt der Strichplattenfassung und der Strichplatte erstreckt. Dadurch kann insbesondere beim Einsatz der Okularvorrichtung in einer Prüfvorrichtung für eine Bildgebungsvorrichtung der gewünschte Mittelpunkt des Blickfelds der Okularvorrichtung zuverlässig markiert werden.

Beispielsweise um sicherzustellen, dass die Strichplattenfassung mit der Strichplatte bei Kippbewegungen der Okularvorrichtung aus der gewünschten Position ausgelenkt wird, kann die Okularvorrichtung insbesondere einen Fixierungsring umfassen, der eine Position der Strichplattenfassung in axialer Richtung definiert.

Vorzugsweise fixiert der Fixierungsring die Strichplattenfassung in axialer Richtung in der Fassung, wodurch zumindest weitestgehend verhindert wird das sich die Strichplattenfassung bezüglich der Fassung in axialer Richtung verschiebt.

Alternativ kann der Fixierungsring auch den Gleitring in axialer Richtung in der Fassung fixieren, sofern der Gleitring mit der Strichplattenfassung mitbewegt ist. Dadurch kann ebenfalls verhindert werden das sich die Strichplattenfassung bezüglich der Fassung in axiale Richtung verschiebt.

Um die Reibung zwischen dem Strichplatte und dem Fixierungsring oder zwischen dem Gleitring und dem Fixierungsring zu reduzieren, kann der Fixierungsring insbesondere aus einem selbstschmierenden Werkstoff gebildet sein.

Beispielsweise kann der Fixierungsring relativ zur Fassung ortsfest angebracht sein, um die Montage des Fixierungsrings zu vereinfachen. Um den Fixierungsring sicher in der Fassung zu befestigen zu können, kann der Fixierungsring in die Fassung eingeschraubt sein.

Die Okularvorrichtung kann insbesondere in eine Prüfvorrichtung eingebracht sein. Die Okularvorrichtung stellt dabei sicher, dass die Strichplatte auch bei unterschiedlichen Ausrichtungen der Okularvorrichtung gleichbleibend ausgerichtet ist. Damit ist es nicht notwendig, die Ausrichtung der Strichplatte zeitaufwendig manuell an die Ausrichtung bzw. an die Orientierung der Okularvorrichtung anzupassen.

Weiter kann die Prüfvorrichtung eine weitere Okularvorrichtung und eine Aufnahme umfassen. Die Aufnahme kann dazu eingerichtet sein, die Okularvorrichtung und die weitere Okularvorrichtung aufzunehmen. Die Aufnahme kann ferner dazu eingerichtet sein, ein Einstellen eines Abstands zwischen der Okularvorrichtung und der weiteren Okularvorrichtung an einen Augenabstand eines Benutzers zu ermöglichen. Dadurch kann eine individuelle Anpassung der Okularvorrichtung und der weiteren Okularvorrichtung an den Benutzer realisiert werden und sichergestellt werden, dass der 3D-Effekt eines Zwischenbilds einer optischen Abbildung für das menschliche Auge nicht durch einen falschen Abstand der Okulare verloren geht. Durch die erfindungsgemäße Okularvorrichtung kann weiter sichergestellt werden, dass durch die Anpassung des Abstands zwischen der Okularvorrichtung und der weiteren Okularvorrichtung an dem Augenabstand des Benutzers die Strichplatte nicht mehr zeitaufwendig manuell eingestellt werden muss.

Im Folgenden wird die vorliegende Erfindung anhand der beigefügten Figuren beispielhaft beschrieben. Die Zeichnung, die Beschreibung und die Ansprüche enthalten zahlreiche Merkmale in Kombination. Der Fachmann wird die Merkmale zweckmäßigerweise auch einzeln betrachten und im Rahmen der Ansprüche sinnvoll in Kombination verwenden.

Falls von einem bestimmten Objekt mehr als ein Exemplar vorhanden ist, ist ggf. nur eines davon in den Figuren und in der Beschreibung mit einem Bezugszeichen versehen. Die Beschreibung dieses Exemplars kann entsprechend auf die anderen Exemplare von dem Objekt übertragen werden. Sind Objekte insbesondere mittels Zahlenwörtern, wie beispielsweise erstes, zweites, drittes Objekt etc. benannt, dienen diese der Benennung und/oder Zuordnung von Objekten. Demnach können beispielsweise ein erstes Objekt und ein drittes Objekt, jedoch kein zweites Objekt umfasst sein. Allerdings könnten anhand von Zahlenwörtern zusätzlich auch eine Anzahl und/oder eine Reihenfolge von Objekten ableitbar sein.

Es zeigen:
- Figur 1: eine beispielhafte Ausführungsform einer Prüfvorrichtung mit einer Okularvorrichtung;
- Figur 2: eine beispielhafte Ausführungsform der Okularvorrichtung; und
- Figur 3: eine Schnittansicht entlang der Schnittachse A-A der beispielhaften Ausführungsform, die in Figur 2 gezeigt ist.

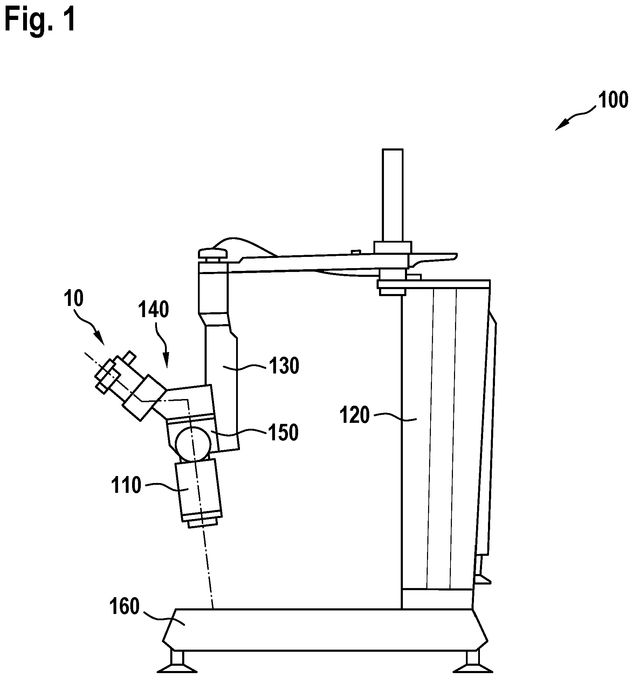

Figur 1 zeigt eine beispielhafte Ausführungsform einer Prüfvorrichtung 100 mit einer erfindungsgemäßen Okularvorrichtung 10. Die Prüfvorrichtung 100 umfasst ein Gestell 120, eine Grundplatte 160 und einen schwenkbaren Arm 130.

Das Gestell 120 ist an der Grundplatte 160 befestigt bzw. auf die Grundplatte 160 aufgestellt. An dem Gestell 120 ist der schwenkbarer Arm 130 angebracht.

An dem schwenkbaren Arm 130 ist eine Bildgebungsvorrichtung 110, insbesondere ein Videomikroskop, über ein Befestigungsmittel 150, insbesondere eine Schwalbe, angebracht. Dies ist rein beispielshaft zu verstehen, es könnte sich hierbei um eine beliebige Bildgebungsvorrichtung handeln. Das Videomikroskop 110 ist vorliegend als Exoskop einsetzbar.

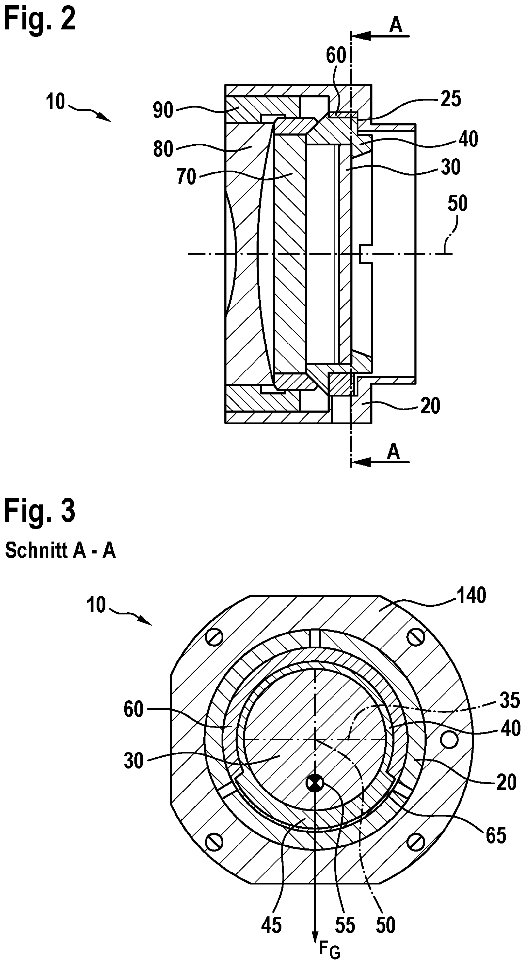

Weiter ist an den schwenkbaren Arm 130 ein Aufnahme 140 angebracht. Die Aufnahme 140 weist zwei Aufnahmebereiche, insbesondere in Form eines Tubus, auf, in welche jeweils eine Okularvorrichtung 10 mit einer Strichplatte 30 (vgl. Figuren 2 und 3) eingebracht ist. Die Okularvorrichtungen 10 können individuell durch Schwenkbewegungen an den Augenabstand des Benutzers angepasst werden. Die Schwenkbewegungen können beispielsweise in der Aufnahme 140 erzeugt werden, in dem die zwei Aufnahmebereich auseinandergeschoben bzw. auseinandergeschwenkt werden. Durch diese Schwenkbewegungen verändert sich neben dem Augenabstand auch die Orientierung der in der Aufnahme 140 aufgenommenen Okularvorrichtung 10 bezüglich deren jeweiliger Mittelachse bzw. Längsachse.

Auf die Grundplatte 160 sind Linien (nicht dargestellt) aufgebracht. Ein Benutzer kann zur Überprüfung der Bildgebungsvorrichtung 110, Referenzlinien (nicht dargestellt) auf der Strichplatte 30 der Okularvorrichtungen 10 mit den Linien auf der Grundplatte 160 abgleichen, um Fehler der Bildgebungsvorrichtung 110 zu detektieren. Insbesondere wenn die Bildgebungsvorrichtung 110 ein Videomikroskop und/oder ein Exoskop ist, kann der Abgleich der Referenzlinien auf der Strichplatte 30 mit den Linien auf der Grundplatte 160 zur visuellen Überprüfung eines optischen Zoomablaufs und/oder zur visuellen Überprüfung einer Bildaufrichtung der Bildgebungsvorrichtung 110 durch den Benutzer verwendet werden.

Figur 2 zeigt eine beispielhafte Ausführungsform der erfindungsgemäßen Okularvorrichtung 10. Die Okularvorrichtung 10 umfasst eine Fassung 20 in Form eines Rotationskörpers.

In der Fassung 20 ist eine Strichplatte 30 angeordnet, die in eine Strichplattenfassung 40 aufgenommen ist. Die Strichplatte 30 und die Strichplattenfassung 40 können stoffschlüssig und/oder formschlüssig miteinander verbunden sein. Weiter sind die Strichplatte 30 und die Stichplattenfassung 40 um eine Drehachse 50 rotierbar in der Fassung gelagert.

Die Lagerung kann wie dargestellt eine Gleitlagerung sein. Dazu kann die Strichplattenfassung in einen Gleitring aufgenommen sein, der zusammen mit der Strichplattenfassung 40 und Strichplatte 30 in Bezug auf die Fassung 20 rotiert.

Hinter dem Fixierungsring 70 kann eine Linse 80 oder ein Linsensystem (nicht dargestellt) angeordnet sein. Die Linse 80 kann in eine Linsenfassung 90 aufgenommen sein.

Die Position der Strichplattenfassung 40 kann weiter durch einen Fixierungsring 70 und einem Lagersitz 25 der Fassung 20 in axialer definiert sein. Der Fixierungsring 70 kann beispielsweise in die Fassung 20 oder wie dargestellt in die Linsenfassung 90 eingeschraubt sein. Die Linsenfassung 80 kann wiederrum in die Fassung 20 eingeschraubt sein.

Figur 3 zeigt eine Schnittansicht der beispielhaften Ausführungsform der erfindungsgemäßen Okularvorrichtung 10, die in Figur 2 dargestellt ist. Die Schnittansicht zeigt zudem beispielhaft, dass die Fassung 20 beispielsweise in die Aufnahme 140 der Prüfvorrichtung 100 aufgenommen sein kann und/oder an die Aufnahme 140 der Prüfvorrichtung 100 angebracht sein kann, die in Figur 1 dargestellt ist.

Die Schnittansicht zeigt weiter eine Draufsicht auf die Strichplatte 30, die Strichplattenfassung 40 und den Gleitring 60. Auf die Strichplatte 30 sind Referenzlinien 35 aufgebracht. Die Referenzlinien 35 können auch in die Strichplatte 30 eingebracht sein. Die Referenzlinien 35 können, wie dargestellt, als Fadenkreuz ausgestaltet sein und eine horizontale Richtung und eine Richtung senkrecht zu der horizontalen Richtung markieren.

Die beispielhafte Strichplattenfassung 40 weist einen radial verbreiterten Abschnitt 45 auf. Die beispielhafte Strichplatte 30 ist rotationssymmetrisch ausgestaltet.

Durch den radial verbreiterten Abschnitt 45 ist die Strichplattenfassung 40 nicht mehr rotationssymmetrisch aber weiterhin spiegelsymmetrisch ausgestaltet. Weiter verschiebt sich durch den radial verbreiterten Abschnitt 45 der gemeinsame Schwerpunkt der Strichplattenfassung und der Strichplatte 55 aus der Drehachse 50 heraus in Richtung des radial verbreiterten Abschnitts 45. Der gemeinsame Schwerpunkt der Strichplattenfassung und der Strichplatte 55 ist nur exemplarisch zur Veranschaulichung eingezeichnet.

Durch die spiegelsymmetrische Ausgestaltung der Strichplattenfassung wirkt die gemeinsame Gewichtskraft F_{G} von Strichplattenfassung 40 und Strichplatte 30 senkrecht zu der Referenzlinie 35 der Strichplatte 30, die die horizontale Richtung markieren soll und stellt dadurch sicher, dass die Referenzlinien 35 auf der Strichplatte 30 nach einer Verschiebung oder nach einem Verschwenken der Okularvorrichtung 10 weiterhin richtig ausgerichtet sind.

Die Strichplattenfassung 40 weist durch den radial verbreiterten Abschnitt 45 zwei unterschiedlich große Außendurchmesser auf. Indem die Strichplattenfassung 45 in den Gleitring 60 aufgenommen ist, können die unterschiedlich große Außendurchmesser der Strichplattenfassung 40 durch den Gleitring 60 ausgeglichen werden. Insbesondere weist der Gleitring 60 zur Aufnahme des radial verbreiterten Abschnitts 45 der Strichplattenfassung 40 eine radiale Ausnehmung 65 auf. Dadurch, dass der Gleitring die unterschiedlichen Außendurchmesser der Strichplattenfassung 40 ausgleicht, ist eine leichtgängige präzise Lagerung, insbesondere Gleitlagerung, der Strichplatte 30 in der Fassung 20 realisierbar.

In anderen Ausführungsformen kann eine Prüfvorrichtung auch leidglich ein Okular oder zwei Okulare und eine Aufnahme umfassen, an der das eine oder die beiden Okulare angebracht sind. Zur Prüfung kann der Benutzer die zu Prüfende Bildgebungsvorrichtung in der Hand halten, wobei sich aufgrund der beschriebenen Ausgestaltung des Okulars die Strichplatte stets in eine geeignete Orientierung dreht.

### Bezugszeichenliste

- 10: Okularvorrichtung
- 20: Fassung
- 25: Lagersitz
- 30: Strichplatte
- 35: Referenzlinie
- 40: Strichplattenfassung
- 45: radial verbreiterter Abschnitt
- 50: Drehachse
- 55: gemeinsamer Schwerpunkt der Strichplattenfassung und der Strichplatte
- 60: Gleitring
- 65: radiale Ausnehmung
- 70: Fixierungsring
- 80: Linse
- 90: Linsenfassung
- 100: Prüfvorrichtung
- 110: Bildgebungsvorrichtung
- 120: Gestell
- 130: schwenkbarer Arm
- 140: Aufnahme
- 150: Befestigungsmittel
- 160: Grundplatte

## Patentansprüche

1. Okularvorrichtung (10) für ein optisches System, umfassend:
eine Fassung (20),
eine Strichplatte (30),
eine Strichplattenfassung (40),
in welche die Strichplatte (30) eingefasst ist, wobei die Strichplattenfassung (40) in der Fassung um eine Drehachse (50) rotierbar gelagert ist, und wobei ein gemeinsamer Schwerpunkt (55) der Strichplattenfassung (40) und der Strichplatte (30) außerhalb der Drehachse (50) liegt.

2. Okularvorrichtung (10) nach Anspruch 1, ferner umfassend ein Drehlager, insbesondere ein Gleitlager, für die Strichplattenfassung (40), das die Drehachse (50) definiert.

3. Okularvorrichtung (10) nach Anspruch 2, wobei das Drehlager einen Gleitring (60) umfasst.

4. Okularvorrichtung (10) nach Anspruch 3, wobei der Gleitring (60) aus einem selbstschmierenden Werkstoff gebildet ist.

5. Okularvorrichtung (10) nach Anspruch 3 oder 4, wobei die Strichplattenfassung (40) in dem Gleitring (60) formschlüssig und/oder stoffschlüssig aufgenommen ist.

6. Okularvorrichtung (10) nach einem der vorhergehenden Ansprüche, wobei die Strichplattenfassung (40) nicht rotationsymmetrisch ausgestaltet ist; und/oder

7. Okularvorrichtung (10) nach Anspruch 6, wobei die Strichplattenfassung (40) einen radial verbreiterten Abschnitt (45) aufweist.

8. Okularvorrichtung (10) zumindest nach den Ansprüchen 5 und 7, wobei der Gleitring (60) eine radiale Ausnehmung aufweist, in welcher der radial verbreiterte Abschnitt (45) der Strichplattenfassung (40) aufgenommen ist.

9. Okularvorrichtung (10) nach einem der vorhergehenden Ansprüche, wobei die Strichplattenfassung (40) eine inhomogene Dichte aufweist.

10. Okularvorrichtung (10) nach einem der vorhergehenden Ansprüche, wobei die Strichplatte (30) einen Horizont definiert, der senkrecht zu einer radialen Linie orientiert ist, die sich von einem Mittelpunkt der Strichplattenfassung (40) durch den gemeinsamen Schwerpunkt der Strichplattenfassung und der Strichplatte (55) erstreckt.

11. Okularvorrichtung (10) nach einem der vorhergehenden Ansprüche, ferner umfassend:
- einen Fixierungsring (70), der eine Position der Strichplattenfassung (40) in axialer Richtung definiert.

12. Okularvorrichtung (10) nach Anspruch 11, wobei der Fixierungsring (70) aus einem selbstschmierenden Werkstoff gebildet ist.

13. Okularvorrichtung (10) nach Anspruch 11 oder 12, wobei der Fixierungsring (70) relativ zur Fassung ortsfest ist.

14. Prüfvorrichtung (100) mit einer Okularvorrichtung (10) nach einem der einem der vorhergehenden Ansprüche.

15. Prüfvorrichtung (100) nach Anspruch 14, ferner umfassend:
- eine weitere Okularvorrichtung (10) nach einem der vorhergehenden Ansprüche, und
- eine Aufnahme, die dazu eingerichtet ist, die Okularvorrichtung (10) und die weitere Okularvorrichtung (10) aufzunehmen, wobei die Aufnahme ferner dazu eingerichtet ist, ein Einstellen eines Abstands zwischen der Okularvorrichtung (10) und der weiteren Okularvorrichtung (10) an einen Augenabstand eines Benutzers zu ermöglichen.
